# EUROPÄISCHE PATENTANMELDUNG

(11) **EP 0 678 820 A2**
(43) Veröffentlichungstag der Anmeldung: **25.10.1995**
(21) Anmeldenummer: 95105314.9
(22) Anmeldetag: 07.04.1995
(51) Int. Cl.: G06K 7/06

(54) **Chipkarten-Leser mit Manipulationserkennung**

(30) Priorität: 22.04.1994 DE 4414159
(71) Anmelder: SIEMENS AKTIENGESELLSCHAFT, D-80333 München (DE)
(72) Erfinder: Niessner, Heinrich, Dipl.-Ing., D-81547 München (DE)

(57) **Zusammenfassung**

Die Erfindung betrifft ein Verfahren zur Erkennung von manipulierten Chipkarten (2) in einer Chipkartenleseeinrichtung (16), wobei Leitungen (8) zur Verbindung der Chipkarte(2) und einer Verarbeitungseinrichtung (14) vorgesehen sind und mit einem HF-Signal beaufschlagt werden. Erfindungsgemäß wird das HF-Signal induktiv über einen Übertrager (9) auf die Leitungen (8) eingekoppelt und die Kapazitätsdifferenz der Chipkarte (2) zu einer vorgegebenen unmanipulierten Karte über eine induktiv am Übertrager (9) angekoppelte Detektions- und Auswerteeinrichtung (13) ausgewertet.

## Beschreibung

Die Erfindung betrifft ein Verfahren und eine Chipkartenleseeinrichtung gemäß den Oberbegriffen der Patentansprüche 1 und 2.

Solch ein Verfahren bzw. eine solche Leseeinrichtung sind aus der EP 04 47 686 A1 bekannt.

Chipkarten werden überall dort eingesetzt, wo mit ihrer Hilfe benutzerindividuelle Vorgänge an Einrichtungen, wie beispielsweise Bankautomaten, Kartentelefonen etc. durchgeführt werden. Diese Einrichtungen weisen hierzu Leseeinrichtungen auf, in die die Chipkarten eingeführt werden. Der Zugriff auf die Einrichtung mit der Chipkarte ist im Fall des Bankautomaten über einen benutzereigenen Code, sowie im Fall des Kartentelefons, über eine die Zugriffsberechtigung der Chipkarte ausweisende, geldwerte Karteninformation gewährleistet.

Durch das Einschieben von manipulierten Chipkarten in die Kartenleseeinrichtung können die intern ablaufenden Lese- und Schreibvorgänge von außen mitverfolgt werden. Hierzu sind beispielsweise an sogenannten Chipkarten-Attrappen flexible Leitungen angebracht, die die Kontaktflächen der eingeführten Chipkarte mit einem externen Chip-Simulator verbinden.

Durch extrem dünne, hochintegrierte Schaltkreise kann dieser Chip-Simulator auch auf der Chipkarte selbst angeordnet sein.

Aus der FR 26 93 014 A1 ist eine Detektionseinrichtung für manipulierte Chipkarten bekannt, bei der ein HF-Signal über Umschalter und die kontaktierenden Köpfe auf die Chipkarte eingekoppelt wird. An der Chipkarte angeschlossene Manipulationsleitungen können dadurch erkannt werden.

Der Erfindung liegt die Aufgabe Zugrunde, ein Verfahren und eine Chipkartenleseeinrichtung der eingangs genannten Art anzugeben, durch die manipulierte Chipkarten jeder Art sicher erkannt werden.

Diese Aufgabe wird erfindungsgemäß für ein Verfahren durch die im Patentanspruch 1 und für eine Chipkartenleseeinrichtung durch die im Patentanspruch 2 angegebenen Merkmale gelöst.

Ein Vorteil der Erfindung besteht darin, daß manipulierte Chipkarten, die beispielsweise mit elektrischen Leitungen oder mit integrierten Schaltkreisen versehen sind, zwar ohne weiteres in die Chipkartenleseeinrichtung eingeführt werden können, daß aber eine Bearbeitung nicht ausgeführt wird. Dadurch ist es für den Manipulator außerhalb der Kartenleseeinrichtung nicht erkennbar, aufgrund welcher Prüfvorgänge der Auslesevorgang seiner manipulierten Karte abgebrochen wird.

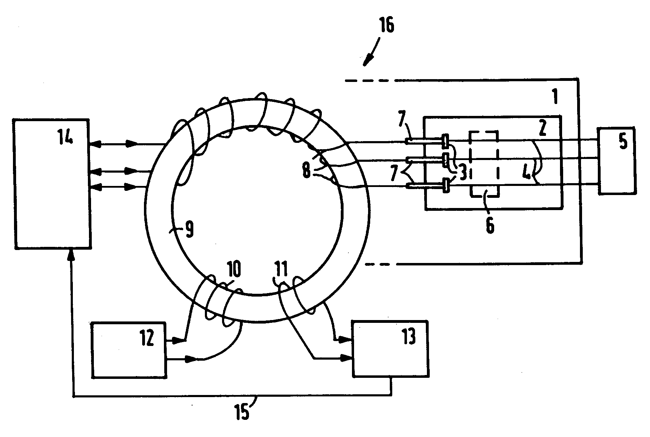

Im folgenden wird die Erfindung anhand eines in der Zeichnung dargestellten Ausführungsbeispieles erläutert.

In der einzigen Figur sind die für das Verständnis der Erfindung relevanten Bestandteile einer Chipkartenleseeinrichtung 16 dargestellt, die im folgenden auch als Kartenleseeinrichtung bezeichnet wird. Die Kartenleseeinrichtung 16 weist einen Kartenraum 1 auf, in den eine Chipkarte 2 eingeführt ist.

Die Chipkarte 2 weist mehrere Kontaktflächen 3 auf, die im eingeführten Zustand der Chipkarte 1 mit Kontaktierungselementen 7 der Kartenleseeinrichtung 16 elektrisch verbunden sind. Reale Chipkarten 2 weisen meistens zwei Reihen von Kontaktflächen auf, zwischen denen im allgemeinen der zugehörige Chip positioniert ist. Zur Beschreibung der Erfindung sind drei solche Kontaktflächen 3 dargestellt.

Die Kontaktierungselemente 7 sind über Leitungen 8 an einer Verarbeitungseinrichtung 14 angeschlossen. Über diese Leitungen 8 werden Schreib- und Lesevorgänge zwischen der Chipkarte 2 und der Verarbeitungseinrichtung 14 abgewickelt.

Die in den Kartenraum 1 eingeführte Chipkarte 2 ist manipuliert, das heißt es handelt sich eigentlich um eine Chipkarten-Attrappe. Hierzu sind beispielsweise Manipulationsleitungen 4 vorgesehen, die die Kontaktflächen 3 mit einem externen Chip-Simulator 5 verbinden. Bei Verwendung von extrem dünnen integrierten Schaltkreisen kann anstelle des externen Chip-Simulators 5 auch ein interner, auf der Chipkarte 2 selbst angeordneter Chip-Simulator 6 vorgesehen sein.

Erfindungsgemäß ist ein Übertrager, beispielsweise ein Ringkern 9 vorgesehen, um den die Leitungen 8 beispielsweise mehrmals gewickelt sind. Weiter ist auf dem Ringkern 9 eine mit einem HF-Generator verbundene Generatorwicklung 10 und eine mit einer Detektions- und Auswerteeinrichtung 13 verbundene Detektorwicklung 11 aufgebracht. Anstelle der Ringform kann der Kern 9 auch andere Formen aufweisen.

Der HF-Generator 12 erzeugt ein sinusförmiges Signal mit einer hohen Frequenz von beispielsweise 70 kHz. Diese Frequenz ist bestimmt durch die Induktivitäten des HF-Generators 12 selbst, des Ringkernes 9 und durch die Kapazität der Chipkarte 2. Die Kapazität der Chipkarte 2 ist hierbei bezogen auf das umgebende Bezugspotential. Über den Ringkern 9, der hierbei als Übertrager funktioniert, transformiert sich die Sinusschwingung auf alle Leitungen 8, die mit der Chipkarte 2 verbunden sind. Sämtliche Anschlüsse der Chipkarte 2 sind mit der periodischen HF-Schwingung im Gleichtakt beaufschlagt.

Die Detektions- und Auswerteeinrichtung 13 überwacht die Frequenz und/oder die Amplitude der vom HF-Generator 12 abgegebenen HF-Schwingung, die bestimmt ist durch die Kapazität der Chipkarte 2. Als Vergleichswert dient der Toleranzbereich, in dem der Kapazitätswert für eine unmanipulierte Chipkarte 2 liegt. Die Detektions- und Auswerteeinrichtung 13 weist hierzu einen nicht näher dargestellten Frequenzdiskriminator, einen Amplitudendetektor und eine Vergleichsstufe auf.

Wird eine manipulierte Chipkarte 2 in den Kartenraum 1 eingeführt, so weist diese einen anderen Kapazitätswert auf. Dies wird von der Detektions- und Auswerteeinrichtung 13 durch eine Änderung der Frequenz und/oder Amplitude der HF-Schwingung erkannt. In diesem Fall wird von der Detektions- und Auswerteeinrichtung 13 ein Signal über eine Statusleitung 15 an die Verarbeitungseinrichtung 14 gegeben, durch das eine manipulierte Chipkarte 2 signalisiert wird. Diese manipulierte Karte kann dann abgewiesen werden.

## Patentansprüche

1. Verfahren zur Erkennung von manipulierten Chipkarten (2) in einer Chipkartenleseeinrichtung (16), wobei Leitungen (8) zur Verbindung der Chipkarte(2) und einer Verarbeitungseinrichtung (14) vorgesehen sind und bei dem ein HF-Signal induktiv über einen Übertrager (9) auf die Leitungen (8) eingekoppelt wird,
**dadurch gekennzeichnet,**
daß die Kapazitätsdifferenz der Chipkarte (2) zu einer vorgegebenen unmanipulierten Chipkarte über eine induktiv am Übertrager (9) angekoppelte Detektions- und Auswerteeinrichtung (13) ausgewertet wird.

2. Chipkartenleseeinrichtung (16) für eine Chipkarte (2) mit Leitungen (8) zur Verbindung der Chipkarte (2) mit einer Verarbeitungseinrichtung (14), und
mit einer Einrichtung zur Erkennung von manipulierten Chipkarten (2), wobei die Einrichtung einen Übertrager (9) aufweist, mit dem jede der Leitungen (8) induktiv gekoppelt ist, und wobei am Übertrager (9) eine Generatorwicklung (10) zur Einspeisung eines HF-Signals vorgesehen ist,
**dadurch gekennzeichnet,**
daß am Übertrager (9) eine mit einer Detektions- und Auswerteeinrichtung (13) verbundene Detektorwicklung (11) vorgesehen ist, wobei die Detektions- und Auswerteeinrichtung (13) zur Erfassung der Kapazitätsdifferenz zu einer vorgegebenen unmanipulierten Chipkarte dient.
